# EUROPEAN PATENT APPLICATION

(11) **EP 4 808 085 A1**
(43) Date of publication of application: **16.09.2026**
(21) Application number: 24893443.2
(22) Date of filing: 20.11.2024
(51) Int. Cl.: H04L 67/10

(54) **STORAGE NODE CLUSTER ACCESS METHOD AND CLOUD MANAGEMENT PLATFORM**

(30) Priority: 24.11.2023 CN 202311585043; 23.01.2024 CN 202410095068
(71) Applicant: Huawei Cloud Computing Technologies Co., Ltd., Gui'an New District, Guizhou 550025 (CN)
(72) Inventor: CHEN, Leiming, Guiyang, Guizhou 550025 (CN); WU, Huatao, Guiyang, Guizhou 550025 (CN); GAO, Zheng, Guiyang, Guizhou 550025 (CN)
(74) Representative: Gill Jennings & Every LLP
(86) International application number: PCT/CN2024/133098
(87) International publication number: WO 2025/108286

(57) **Abstract**

This application discloses a storage node cluster access method and a cloud management platform, to allow a plurality of applications to share a same storage pool, and further ensure data security between the applications. The method in this application includes: A tenant may input an identifier of an application of the tenant and an identifier of a compute node of the tenant into a binding interface provided by the cloud management platform. Next, the cloud management platform may create a binding relationship among the identifier of the application, the identifier of the compute node, and an identifier of storage space serving the application, and enable the compute node to run the application. Then, the cloud management platform may deploy the binding relationship in a proxy node. Subsequently, when receiving an access request from the compute node, the proxy node may verify the access request based on the binding relationship. If information carried in the access request conforms to the binding relationship, the proxy node creates the storage space in a storage node cluster or completes data processing in the storage space.

## Description

This application claims priorities to Chinese Patent Application No. 202311585043.6, filed with the China National Intellectual Property Administration on November 24, 2023 and entitled "DATA PROCESSING METHOD, APPARATUS, AND OTHER DEVICES", and to Chinese Patent Application No. 202410095068.6, filed with the China National Intellectual Property Administration on January 23, 2024 and entitled "STORAGE NODE CLUSTER ACCESS METHOD AND CLOUD MANAGEMENT PLATFORM", both of which are incorporated herein by reference in their entireties.

### TECHNICAL FIELD

Embodiments of this application relate to the field of cloud technologies, and in particular, to a cloud management platform and a storage node cluster access method that is based on the cloud management platform.

### BACKGROUND

With the rapid development of cloud technologies, cloud vendors can provide cloud service systems built on a storage-compute separation architecture. In this architecture, an application of a tenant can run in a compute pool, and data required by the application can be stored in a storage pool. The compute pool and the storage pool are physically isolated, but communicatively connected. Therefore, when an application in the compute pool needs to process data, the application may invoke data from the storage pool to meet service requirements.

Currently, in the cloud service systems built on the storage-compute separation architecture, for different applications of a same tenant or applications of different tenants, the cloud vendors need to create a dedicated storage pool for each application to provide secure and stable storage services for the application. However, this approach requires extremely high hardware costs and leads to an excessive storage scale, resulting in low processing efficiency during data processing.

In view of this, cloud vendors have attempted to allow a plurality of applications to share one storage pool. However, this approach may cause an application, when accessing the storage pool, to incorrectly access data of other applications, resulting in a series of data security issues.

### SUMMARY

Embodiments of this application provide a cloud management platform and a storage node cluster access method that is based on the cloud management platform, to allow a plurality of applications to share a same storage pool, and further ensure data security between the applications.

A first aspect of embodiments of this application provides a storage node cluster access method that is based on a cloud management platform. The cloud management platform configured to implement the method may manage infrastructure that provides a cloud service, and the infrastructure may include a compute node purchased by a tenant, a proxy node located between the compute node and a storage node cluster, and the storage node cluster that can provide storage space. The method includes:

When the tenant needs to bind an application of the tenant to a compute node that is specified by the tenant and that is configured to run the application, the cloud management platform may provide a binding interface for the tenant. Therefore, the tenant may send an identifier of the application and an identifier of the compute node to the binding interface, so that the cloud management platform receives the identifier of the application and the identifier of the compute node through the binding interface.

After obtaining the identifier of the application and the identifier of the compute node, the cloud management platform may generate an identifier of storage space serving the application (where the storage space may be used to store data of the application), create a binding relationship among the identifier of the application, the identifier of the compute node, and the identifier of the storage space, and deploy the application in the compute node, so that the compute node runs the application.

After obtaining the binding relationship, the cloud management platform may deploy the binding relationship in the proxy node. When the application has a data processing requirement, the compute node running the application may send an access request to the proxy node. After receiving the access request from the compute node, the proxy node may verify, based on the binding relationship, information included in the access request. If the access request includes the identifier of the compute node and the identifier of the storage space, it indicates that the information included in the access request conforms to the binding relationship, and the proxy node creates the storage space in the storage node cluster or completes data processing in the storage space, to meet the data processing requirement of the application.

It can be learned from the foregoing method that the cloud management platform may create, based on a request of the tenant, the binding relationship among the identifier indicating the application of the tenant, the identifier of the compute node running the application, and the identifier of the storage space serving the application, and deploy the binding relationship in the proxy node. When the compute node running the application sends the access request to the proxy node, the proxy node may perform security verification on the access request based on the binding relationship. If the access request passes the security verification, it indicates that the information carried in the access request conforms to the binding relationship. Therefore, the proxy node may replace the compute node running the application to create, in the storage node cluster (that is, a storage pool), the storage space serving the application or access the storage space to complete data processing, so as to meet the data processing requirement of the application. It can be learned that the cloud management platform may indicate, by using the binding relationship among the application, the compute node, and the storage space, the proxy node to create, in the storage pool for the application of the tenant, the storage space dedicated to the application. When the compute node running the application needs to access the storage space, the proxy node may perform security verification on a corresponding access request. After the security verification succeeds, the proxy node replaces the compute node to access the storage space, so as to complete data processing. In this way, even if there are a plurality of applications, the proxy node may create dedicated storage space for each application in the storage pool, so that the plurality of applications can share the same storage pool. In addition, when a compute node running each application needs to access corresponding storage space, the proxy node may perform security verification on a corresponding access request in real time, and the compute node is allowed to access the corresponding storage space only after the security verification succeeds, to ensure data security between the applications.

In a possible implementation, the identifier of the storage space includes namespace of the storage space. In the foregoing implementation, the identifier of the application may be used to represent the application, and is, for example, a universally unique identifier of the application. Similarly, the identifier of the compute node may be used to represent the application, and is, for example, a universally unique identifier of the compute node. Similarly, the identifier of the storage space may be used as metadata of the storage space, for example, the namespace of the storage space.

In a possible implementation, the method further includes: The cloud management platform receives an identifier creation request for the application from the tenant through a creation interface; and the cloud management platform creates the identifier of the application based on the identifier creation request, and provides the identifier of the application for the tenant through the creation interface. In the foregoing implementation, when the tenant needs to create the identifier of the application, the cloud management platform may provide the creation interface for the tenant. Therefore, the tenant may send the identifier creation request for the application to the creation interface, so that the cloud management platform receives the identifier creation request for the application through the creation interface. After receiving the identifier creation request for the application, the cloud management platform may create, based on an indication of the identifier creation request, the identifier representing the application, and return the identifier of the application to a client of the tenant through the creation interface for subsequent use of the tenant.

In a possible implementation, the storage node cluster includes a plurality of storage nodes and a management node that manages the plurality of storage nodes. That the cloud management platform deploys the binding relationship in the proxy node includes: The cloud management platform sends the binding relationship to the management node, to deploy the binding relationship in the proxy node via the management node. In the foregoing implementation, the storage node cluster includes the plurality of storage nodes and the management node that manages the plurality of storage nodes, and three ends of the management node are respectively communicatively connected to the cloud management platform, the proxy node, and the plurality of storage nodes. In view of this, after obtaining the binding relationship among the identifier of the application, the identifier of the compute node, and the identifier of the storage space, the cloud management platform may directly send the binding relationship to the management node. After obtaining the binding relationship, the management node may store the binding relationship, and send the binding relationship to the proxy node, so that the proxy node stores the binding relationship. In this way, with cooperation of the management node, the cloud management platform successfully deploys the binding relationship in the proxy node.

In a possible implementation, the method further includes: The cloud management platform notifies, through the binding interface, the tenant that the application has been bound to the compute node. In the foregoing implementation, after sending the binding relationship to the proxy node, the management node may notify the cloud management platform that the binding relationship has been successfully processed, in other words, the cloud management platform, the proxy node, the management node, and the compute node all have successfully obtained the binding relationship, so that the binding relationship among the application, the compute node, and the storage space is synchronized. Therefore, the cloud management platform may present, to the tenant through the binding interface, that the application has been bound to the compute node (where a tenant side does not need to sense the storage space). This is equivalent to notifying the tenant that the application has been successfully bound to the compute node.

In a possible implementation, the binding relationship further indicates the proxy node to verify an initialization request from the compute node, and if the initialization request includes the identifier of the application and the identifier of the compute node, the proxy node sends the identifier of the storage space to the compute node. In the foregoing implementation, when the application needs to be initialized, the compute node running the application may send, to the proxy node, the initialization request generated by the application. After obtaining the initialization request from the compute node, the proxy node may verify, based on the binding relationship, information included in the initialization request, to determine whether the access request includes both the identifier of the application and the identifier of the compute node. If the initialization request includes the identifier of the application and the identifier of the compute node, it indicates that the information included in the initialization request conforms to the binding relationship. The proxy node finds, from the binding relationship, the identifier of the storage space serving the application, and sends the identifier to the compute node, so that the application stores the identifier of the storage space, thereby successfully completing initialization.

In a possible implementation, that the proxy node creates the storage space in the storage node cluster or processes the data in the storage space includes: The proxy node sends the access request to the management node, where the access request indicates the management node to verify the access request, and if the access request includes the identifier of the storage space, the proxy node creates the storage space in any one of the plurality of storage nodes; or the proxy node sends the access request to the storage node, where the access request indicates the storage node to verify the access request, and if the access request includes the identifier of the storage space, the proxy node processes the data in the storage space. In the foregoing implementation, after receiving the access request from the compute node running the application, the proxy node may perform security verification on the access request. If the security verification succeeds, the proxy node may perform different operations based on a type of the access request. If the access request is a creation request for the storage space, the proxy node may send the access request to the management node, so that the management node verifies the access request. If the access request includes the identifier of the storage space, it indicates that the information included in the access request is valid. Therefore, the management node selects a storage node from the plurality of storage nodes, and creates the storage space in the storage node. The identifier of the storage space may be used as metadata of the storage space. If the access request is a data processing request for the storage space, the proxy node may send the access request to the storage node, so that the storage node verifies the access request. If the access request includes the identifier of the storage space, it indicates that the access request is valid. Therefore, the storage node may find the storage space based on the identifier of the storage space, and process the data in the storage space, to meet the data processing requirement of the application.

In a possible implementation, the storage node cluster is located at a same site, and the site includes any one of the following: a rack, a room, a data center, a region, and an availability zone.

In a possible implementation, the compute node includes any one of the following: a physical server, a bare metal server, a virtual machine, and a container.

A second aspect of embodiments of this application provides a storage node cluster access method that is based on a proxy node. The proxy node is disposed in infrastructure that provides a cloud service, the infrastructure is managed by a cloud management platform, the infrastructure further includes a compute node and a storage node cluster, and the method includes: The proxy node receives a binding relationship among an identifier of an application, an identifier of the compute node, and an identifier of storage space from the cloud management platform, where the identifier of the application and the identifier of the compute node are obtained by the cloud management platform from a tenant, the compute node runs the application, the identifier of the storage space is generated by the cloud management platform, and the storage space is used to store data of the application; and the proxy node receives an access request from the compute node, verifies the access request based on the binding relationship, and if the access request includes the identifier of the compute node and the identifier of the storage space, the proxy node creates the storage space in the storage node cluster or processes the data in the storage space.

In a possible implementation, the identifier of the storage space includes namespace of the storage space.

In a possible implementation, the storage node cluster includes a plurality of storage nodes and a management node that manages the plurality of storage nodes. That the proxy node receives the binding relationship among the identifier of the application, the identifier of the compute node, and the identifier of the storage space from the cloud management platform includes: The proxy node directly receives the binding relationship among the identifier of the application, the identifier of the compute node, and the identifier of the storage space from the management node, where the binding relationship is obtained by the management node from the cloud management platform.

In a possible implementation, the method further includes: The proxy node verifies an initialization request from the compute node, and if the initialization request includes the identifier of the application and the identifier of the compute node, the proxy node sends the identifier of the storage space to the compute node.

In a possible implementation, the proxy node verifies the access request based on the binding relationship, and that the proxy node creates the storage space in the storage node cluster or processes the data in the storage space if the access request includes the identifier of the compute node and the identifier of the storage space includes: The proxy node sends the access request to the management node, where the access request indicates the management node to verify the access request, and if the access request includes the identifier of the storage space, the proxy node creates the storage space in any one of the plurality of storage nodes; or the proxy node sends the access request to the storage node, where the access request indicates the storage node to verify the access request, and if the access request includes the identifier of the storage space, the proxy node processes the data in the storage space.

In a possible implementation, the storage node cluster is located at a same site, and the site includes any one of the following: a rack, a room, a data center, a region, and an availability zone.

In a possible implementation, the compute node includes any one of the following: a physical server, a bare metal server, a virtual machine, and a container.

A third aspect of embodiments of this application provides a cloud management platform. The cloud management platform is configured to manage infrastructure that provides a cloud service, the infrastructure includes a compute node, a proxy node, and a storage node cluster. The cloud management platform includes: a first receiving module, configured to receive an identifier of an application and an identifier of the compute node from a tenant through a binding interface; a first creation module, configured to create a binding relationship among the identifier of the application, the identifier of the compute node, and an identifier of storage space, and deploy the application in the compute node, where the storage space is used to store data of the application; and a deployment module, configured to deploy the binding relationship in the proxy node, where the binding relationship indicates the proxy node to verify an access request from the compute node, and if the access request includes the identifier of the compute node and the identifier of the storage space, the proxy node creates the storage space in the storage node cluster or processes the data in the storage space.

In a possible implementation, the identifier of the storage space includes namespace of the storage space.

In a possible implementation, the cloud management platform further includes: a second receiving module, configured to receive an identifier creation request for the application from the tenant through a creation interface; and a second creation module, configured to create the identifier of the application based on the identifier creation request, and provide the identifier of the application for the tenant through the creation interface.

In a possible implementation, the cloud management platform further includes: a notification module, configured to notify, through the binding interface, the tenant that the application has been bound to the compute node.

In a possible implementation, the storage node cluster includes a plurality of storage nodes and a management node that manages the plurality of storage nodes, and the deployment module is configured to send the binding relationship to the management node, to deploy the binding relationship in the proxy node via the management node.

In a possible implementation, the binding relationship further indicates the proxy node to verify an initialization request from the compute node, and if the initialization request includes the identifier of the application and the identifier of the compute node, the proxy node sends the identifier of the storage space to the compute node.

In a possible implementation, that the proxy node creates the storage space in the storage node cluster or processes the data in the storage space includes: The proxy node sends the access request to the management node, where the access request indicates the management node to verify the access request, and if the access request includes the identifier of the storage space, the proxy node creates the storage space in any one of the plurality of storage nodes; or the proxy node sends the access request to the storage node, where the access request indicates the storage node to verify the access request, and if the access request includes the identifier of the storage space, the proxy node processes the data in the storage space.

In a possible implementation, the storage node cluster is located at a same site, and the site includes any one of the following: a rack, a room, a data center, a region, and an availability zone.

In a possible implementation, the compute node includes any one of the following: a physical server, a bare metal server, a virtual machine, and a container.

A fourth aspect of embodiments of this application provides a proxy node. The proxy node is disposed in infrastructure that provides a cloud service, the infrastructure is managed by a cloud management platform, the infrastructure further includes a compute node and a storage node cluster, and the proxy node includes: a receiving module, configured to receive a binding relationship among an identifier of an application, an identifier of the compute node, and an identifier of storage space from the cloud management platform, where the identifier of the application and the identifier of the compute node are obtained by the cloud management platform from a tenant, the compute node runs the application, the identifier of the storage space is generated by the cloud management platform, and the storage space is used to store data of the application; and a processing module, configured to receive an access request from the compute node, verify the access request based on the binding relationship, and if the access request includes the identifier of the compute node and the identifier of the storage space, the proxy node creates the storage space in the storage node cluster or processes the data in the storage space.

In a possible implementation, the identifier of the storage space includes namespace of the storage space.

In a possible implementation, the storage node cluster includes a plurality of storage nodes and a management node that manages the plurality of storage nodes, and the receiving module is further configured to directly receive the binding relationship among the identifier of the application, the identifier of the compute node, and the identifier of the storage space from the management node, where the binding relationship is obtained by the management node from the cloud management platform.

In a possible implementation, the proxy node further includes: a feedback module, configured to verify an initialization request from the compute node, and if the initialization request includes the identifier of the application and the identifier of the compute node, the proxy node sends the identifier of the storage space to the compute node.

In a possible implementation, the processing module is configured to: send the access request to the management node, where the access request indicates the management node to verify the access request, and if the access request includes the identifier of the storage space, the proxy node creates the storage space in any one of the plurality of storage nodes; or send the access request to the storage node, where the access request indicates the storage node to verify the access request, and if the access request includes the identifier of the storage space, the proxy node processes the data in the storage space.

In a possible implementation, the storage node cluster is located at a same site, and the site includes any one of the following: a rack, a room, a data center, a region, and an availability zone.

In a possible implementation, the compute node includes any one of the following: a physical server, a bare metal server, a virtual machine, and a container.

A fifth aspect of embodiments of this application provides a compute device cluster. The compute device cluster includes at least one compute device, and each compute device includes a processor and a memory. The memory is configured to store instructions, and the processor is configured to cause the compute device cluster to perform the method according to any one of the first aspect, the possible implementations of the first aspect, the second aspect, or the possible implementations of the second aspect based on the instructions.

A sixth aspect of embodiments of this application provides a computer storage medium. The computer storage medium stores one or more instructions, and when the instructions are executed by one or more computers, the one or more computers are caused to perform the method according to any one of the first aspect, the possible implementations of the first aspect, the second aspect, or the possible implementations of the second aspect.

A seventh aspect of embodiments of this application provides a computer program product. The computer program product stores instructions. When the instructions are executed by a computer, the computer is caused to implement the method according to any one of the first aspect, the possible implementations of the first aspect, the second aspect, or the possible implementations of the second aspect.

In this embodiment of this application, when a tenant needs to bind an application of the tenant to a compute node of the tenant together, the tenant may input an identifier of the application and an identifier of the compute node into a binding interface provided by a cloud management platform. Next, the cloud management platform may determine information about storage space (used to store data of the application) serving the application, to create a binding relationship among the identifier of the application, the identifier of the compute node, and an identifier of the storage space, and enable the compute node to run the application. Then, the cloud management platform may deploy the binding relationship in a proxy node. Because the proxy node is located between the compute node and a storage node cluster, when the proxy node receives an access request from the compute node, the proxy node may verify the access request based on the binding relationship. If the access request includes the identifier of the compute node and the identifier of the storage space that are bound to each other, the proxy node creates the storage space in the storage node cluster or completes data processing in the storage space. In the foregoing process, the cloud management platform may create, based on a request of the tenant, the binding relationship among the identifier indicating the application of the tenant, the identifier of the compute node running the application, and the identifier of the storage space serving the application, and deploy the binding relationship in the proxy node. When the compute node running the application sends the access request to the proxy node, the proxy node may perform security verification on the access request based on the binding relationship. If the access request passes the security verification, it indicates that the information carried in the access request conforms to the binding relationship. Therefore, the proxy node may replace the compute node running the application to create, in the storage node cluster (that is, a storage pool), the storage space serving the application or access the storage space to complete data processing, so as to meet the data processing requirement of the application. It can be learned that the cloud management platform may indicate, by using the binding relationship among the application, the compute node, and the storage space, the proxy node to create, in the storage pool for the application of the tenant, the storage space dedicated to the application. When the compute node running the application needs to access the storage space, the proxy node may perform security verification on a corresponding access request. After the security verification succeeds, the proxy node replaces the compute node to access the storage space, so as to complete data processing. In this way, even if there are a plurality of applications, the proxy node may create dedicated storage space for each application in the storage pool, so that the plurality of applications can share the same storage pool. In addition, when a compute node running each application needs to access corresponding storage space, the proxy node may perform security verification on a corresponding access request in real time, and the compute node is allowed to access the corresponding storage space only after the security verification succeeds, to ensure data security between the applications.

### BRIEF DESCRIPTION OF DRAWINGS

FIG. 1 is a diagram of a structure of a cloud service system according to an embodiment of this application;
FIG. 2 is a schematic flowchart of a storage node cluster access method based on a cloud management platform according to an embodiment of this application;
FIG. 3 is a diagram of application information obtaining according to an embodiment of this application;
FIG. 4 is a diagram of binding an application to a virtual machine according to an embodiment of this application;
FIG. 5 is a diagram of accessing a storage pool by a virtual machine according to an embodiment of this application;
FIG. 6 is a diagram of a structure of a cloud management platform according to an embodiment of this application;
FIG. 7 is a diagram of a structure of a proxy node according to an embodiment of this application;
FIG. 8 is a diagram of a structure of a compute device according to an embodiment of this application;
FIG. 9 is a diagram of a structure of a compute device cluster according to an embodiment of this application; and
FIG. 10 is a diagram of computer devices in a computer cluster being connected via a network according to an embodiment of this application.

### DESCRIPTION OF EMBODIMENTS

Embodiments of this application provide a cloud management platform and a storage node cluster access method that is based on the cloud management platform, to allow a plurality of applications to share a same storage pool, and further ensure data security between the applications.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have", and any other variants mean to cover the non-exclusive inclusion, so that a process, method, system, product, or device that includes a series of units is not necessarily limited to those units, but may include other units not expressly listed or inherent to such a process, method, system, product, or device.

With the rapid development of cloud technologies, cloud vendors can provide cloud service systems built on a storage-compute separation architecture. In this architecture, an application of a tenant can run in a compute pool, and data required by the application can be stored in a storage pool. The compute pool and the storage pool are physically isolated, but are communicatively connected. Therefore, when an application in the compute pool needs to process data, the application may invoke data from the storage pool to meet a service requirement.

Currently, in the cloud service systems built on the storage-compute separation architecture, for different applications of a same tenant or applications of different tenants, the cloud vendors need to create a dedicated storage pool for each application to provide secure and stable storage services for each application. However, because there are usually a plurality of compute nodes configured to run an application, and correspondingly, a storage pool set for the application may usually also include a plurality of storage nodes, once a quantity of applications increases, a quantity of storage pools also increases accordingly. This requires extremely high hardware costs for constructing the cloud service system and causes an excessively large storage scale, resulting in low processing efficiency during data processing.

In view of this, the cloud vendors attempt to allow a plurality of applications to share one storage pool. However, in this manner, when an application accesses the storage pool, the application may incorrectly access data of another application, resulting in a series of data security issues. Therefore, how to ensure data security between the plurality of applications when the plurality of applications share the same storage pool becomes an urgent problem to be resolved.

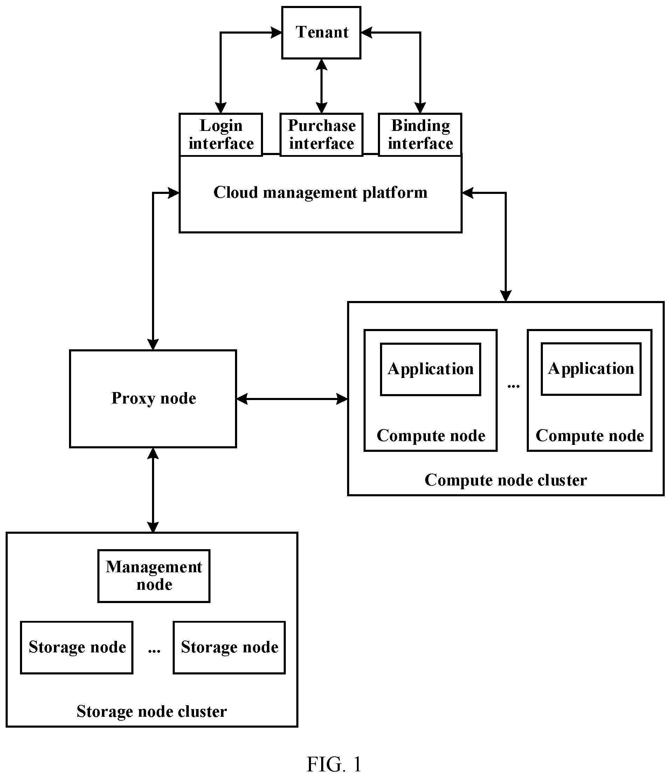

To resolve the foregoing problem, an embodiment of this application provides a storage node cluster access method that is based on a cloud management platform. The method may be implemented by a cloud service system. FIG. 1 is a diagram of a structure of a cloud service system according to an embodiment of this application. As shown in FIG. 1, the cloud service system includes infrastructure that can provide a cloud service and a cloud management platform that manages the infrastructure. The following separately describes the cloud management platform and the infrastructure.

The cloud management platform may centrally manage the infrastructure in the entire cloud service system (for example, select specific compute nodes for a tenant from a compute node cluster included in the infrastructure; for another example, bind applications of the tenant to the compute nodes of the tenant, so that the compute nodes run the applications of the tenant; and for another example, in a storage node cluster, allocate dedicated storage space to the compute nodes of the tenant, to store data of the applications of the tenant), and may also be opened to tenants outside the cloud service system and respond to their requests. For example, the cloud management platform may provide various interfaces such as a login interface, a creation interface, a purchase interface, and a binding interface, for access of a client of the tenant (for example, a terminal device used by the tenant or a browser on the terminal device). The cloud management platform may perform identity authentication on the client of the tenant through the login interface. After the identity authentication succeeds, the client of the tenant can be allowed to log in to the cloud management platform. For another example, the cloud management platform may allow, through the purchase interface, the client of the tenant to send a cloud resource purchase request of the tenant to the cloud management platform. The cloud management platform may select, based on the cloud resource purchase request, dedicated compute nodes for the tenant in the compute node cluster of the infrastructure, and provide identifiers of the compute nodes for the tenant, to provide the cloud service for the tenant via the compute nodes. For another example, the cloud management platform may allow, through the creation interface, the client of the tenant to send, to the cloud management platform, an identifier creation request for an application from the tenant, where the request indicates the application of the tenant. Next, the cloud management platform may create an identifier of the application of the tenant based on the identifier creation request, and provide the identifier of the application of the tenant for the tenant. For another example, the cloud management platform may allow, through the binding interface, the client of the tenant to send the identifier of the application of the tenant and an identifier of a compute node of the tenant to the cloud management platform. Then, the cloud management platform may create a binding relationship among the identifier of the application of the tenant, the identifier of the compute node of the tenant, and an identifier of storage space serving the application, to enable the compute node of the tenant to run the application, and deliver the binding relationship to a proxy node, so that the proxy node creates, in the storage node cluster, the storage space serving the application, to store data of the application. In this way, the compute node of the tenant, the application of the tenant, and the storage space serving the application are bound together. Once the application needs to process the data, the compute node running the application may send an access request for the storage space to the proxy node, so that the proxy node completes data processing in the storage space. Details are not described herein.

The infrastructure may include the compute node cluster, the proxy node (which may also be referred to as a data processing unit (data processing unit, DPU)), and the storage node cluster. The following separately describes the three concepts: (1) The compute node cluster may also be referred to as a compute pool. The compute pool may include a plurality of compute nodes, and the plurality of compute nodes may be selected by the cloud management platform, so that a dedicated compute node of the tenant is selected from the plurality of compute nodes based on a request of the tenant, to run an application of the tenant. (2) The proxy node may not only be used as an intermediate medium of the compute node cluster and the storage node cluster, but also be (directly or indirectly) connected to the cloud management platform, so as to (directly or indirectly) receive, from the cloud management platform, the binding relationship among the identifier of the application of the tenant, the identifier of the compute node of the tenant, and the identifier of the storage space serving the application, and perform first-level security verification on an initialization request and the access request from the compute node based on the binding relationship. When the security verification succeeds, the proxy node responds to the initialization request (for example, returns, to the compute node, the identifier of the storage space serving the application) and the access request (for example, delivers the access request to the storage node cluster for processing, and creates, in the storage node cluster, the storage space serving the application or completes data processing in the storage space). (3) The storage node cluster may also be referred to as a storage pool. The storage pool may include a plurality of storage nodes and a management node that manages the plurality of storage nodes. The management node may directly receive, from the cloud management platform, the binding relationship among the identifier of the application of the tenant, the identifier of the compute node of the tenant, and the identifier of the storage space serving the application, and set the binding relationship in the proxy node. In addition, the management node may further receive the access request (for example, a storage space creation request) forwarded by the proxy node from the compute node of the tenant, and perform second-level security verification on the access request. When the security verification succeeds, a storage node (or some storage nodes) may be selected, and the storage space serving the application of the tenant may be created in the storage node. The selected storage node may receive the access request (for example, a data processing request) forwarded by the proxy node from the compute node of the tenant, and perform second-level security verification on the access request. When the security verification succeeds, the storage node may complete data processing in the storage space serving the application of the tenant.

Further, the compute node, the proxy node, the storage node, and the management node may all be considered as cloud instances in the cloud service system. The cloud instance may be presented in a plurality of manners. For example, the cloud instance may be a physical server selected by the cloud management platform. For another example, the cloud instance may be a virtual machine (virtual machine, VM) created by the cloud management platform on the physical server by using a virtualization technology. For another example, the cloud instance may be a container (docker) created by the cloud management platform on the physical server by using the virtualization technology. For another example, the cloud instance may be a micro virtual machine (microVM) created by the cloud management platform on the physical server by using the virtualization technology. For another example, the cloud instance may be a bare metal server selected by the cloud management platform.

Further, the storage node cluster is usually disposed in a same site. The site may be presented in a plurality of forms. For example, the site may be a rack (rack) in the infrastructure. For another example, the site may be a room (room) in the infrastructure. For another example, the site may be a data center (data center, DC) in the infrastructure. For another example, the site may be a region (region) in the infrastructure. For another example, the site may be an availability zone (availability zone, AZ) in the infrastructure.

Further, the compute node cluster, the proxy node, and the storage node cluster may be deployed at a same site, or may be respectively deployed at different sites. This is not limited herein, and deployment may be performed based on an actual requirement.

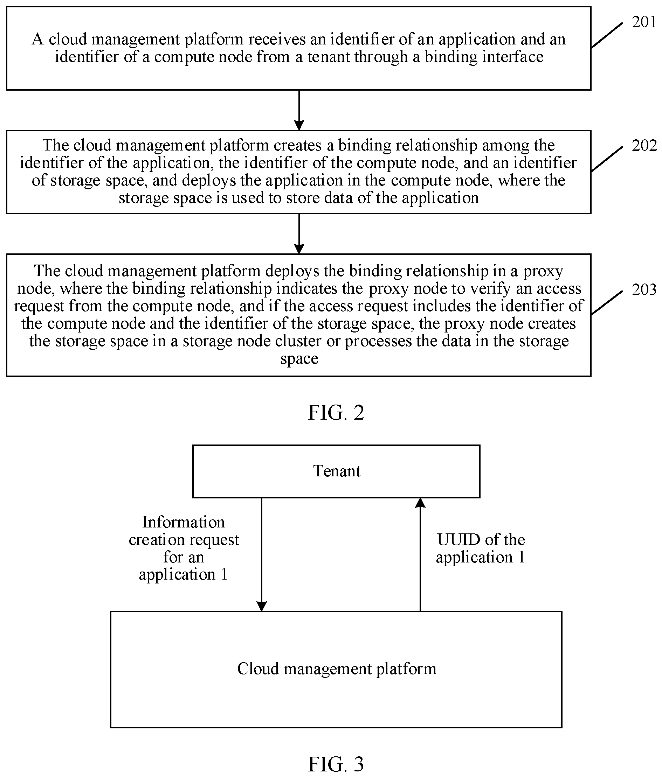

It can be learned from the cloud service system that, based on a request of the tenant, the cloud management platform may run an application of the tenant on a dedicated compute node of the tenant, and allocate dedicated storage space to the application of the tenant (that is, the compute node of the tenant) in the storage node cluster (via the proxy node), to store data of the application of the tenant, and the application of the tenant (that is, the compute node of the tenant) accesses and invokes the data, to complete data processing. It can be learned that the cloud management platform may bind the application of the tenant, the compute node running the application, and the storage space serving the application together. Regardless of a quantity of applications, dedicated storage space is set in the storage node cluster for the applications to access. Therefore, a plurality of applications can share a same storage node cluster (storage pool), and a data security issue can be avoided. To further understand the foregoing process, the following further describes the process with reference to FIG. 2. FIG. 2 is a schematic flowchart of a storage node cluster access method based on a cloud management platform according to an embodiment of this application. As shown in FIG. 2, the method may be implemented by the cloud service system shown in FIG. 1. The cloud service system includes a cloud management platform and infrastructure configured to provide a cloud service. The infrastructure includes a compute node cluster, a proxy node, and a storage node cluster, and the compute node cluster includes a compute node that has been allocated to a tenant. The method includes the following steps.

Step 201: The cloud management platform receives an identifier of an application and an identifier of the compute node from the tenant through a binding interface.

In this embodiment, when the tenant needs to bind an application of the tenant to a compute node that is specified by the tenant and that is configured to run the application, the cloud management platform may provide the binding interface (for example, a binding relationship input field and a reminder window on a tenant interface) for a client used by the tenant. Therefore, the tenant may send, to the binding interface via the client, an identifier of the application of the tenant and an identifier of the compute node that is specified by the tenant and that is configured to run the application, so that the cloud management platform receives the identifier of the application (for example, a unique identifier of the application) and the identifier of the compute node (for example, a unique identifier of the compute node) through the binding interface.

Specifically, before the tenant sends the identifier of the application and the identifier of the compute node to the cloud management platform, the tenant may obtain the identifier of the application in the following manner:

When the tenant needs to create the identifier of the application, the cloud management platform may provide a creation interface (for example, an application information request field on the tenant interface) for the client used by the tenant. Therefore, the tenant may send an identifier creation request for the application to the creation interface via the client, so that the cloud management platform receives the identifier creation request for the application through the creation interface. After receiving the identifier creation request for the application, the cloud management platform may parse the identifier creation request, to determine that the identifier of the application needs to be created for the tenant. Therefore, the cloud management platform may create the identifier representing the application, and return the identifier of the application to the client of the tenant through the creation interface for use of the tenant.

For example, as shown in FIG. 3 (where FIG. 3 is a diagram of application information obtaining according to an embodiment of this application), when the tenant needs to create a universally unique identifier (universally unique identifier, UUID) of an application (data service) 1, the tenant may input an identifier creation request for the application 1 into the application information request field on the tenant interface provided by the cloud management platform. Therefore, the cloud management platform may receive the identifier creation request through the application information request field. In this case, the cloud management platform may create the dedicated UUID for the application 1 based on the identifier creation request, and return the UUID of the application 1 to the tenant.

More specifically, before the tenant sends the identifier of the application and the identifier of the compute node to the cloud management platform, the tenant may obtain the identifier of the compute node in the following manner:

When the tenant needs to purchase the compute node, the cloud management platform may provide a purchase interface (for example, a virtual machine purchase field on the tenant interface) for the client used by the tenant. Therefore, the tenant may send a purchase request for the compute node to the purchase interface via the client, so that the cloud management platform receives the purchase request for the compute node through the purchase interface. After receiving the purchase request for the compute node, the cloud management platform may select the dedicated compute node of the tenant from the compute node cluster, and return the identifier of the compute node to the client of the tenant through the purchase interface, to notify that the compute node is successfully purchased.

The foregoing example is still used. When the tenant needs to purchase a virtual machine, the tenant may input a virtual machine purchase request into the virtual machine purchase field on the tenant interface provided by the cloud management platform. Therefore, the cloud management platform may receive the virtual machine purchase request through the virtual machine purchase field. In this case, the cloud management platform may select a dedicated virtual machine 1 for the tenant from a compute pool based on the virtual machine purchase request, and return a UUID of the virtual machine 1 to the tenant.

Step 202: The cloud management platform creates a binding relationship among the identifier of the application, the identifier of the compute node, and an identifier of storage space, and deploys the application in the compute node, where the storage space is used to store data of the application.

Step 203: The cloud management platform deploys the binding relationship in the proxy node, where the binding relationship indicates the proxy node to verify an access request from the compute node, and if the access request includes the identifier of the compute node and the identifier of the storage space, the proxy node creates the storage space in the storage node cluster or processes the data in the storage space.

After obtaining the identifier of the application and the identifier of the compute node, the cloud management platform may generate the identifier of the storage space (for example, namespace (namespace) of the storage space) serving the application, create the binding relationship among the identifier of the application, the identifier of the compute node, and the identifier of the storage space (which may also be understood as a binding relationship among the application, the compute node, and the storage space), and deploy the application in the compute node, so that the compute node runs the application. It may be understood that the storage space may be used to store the data of the application. Therefore, the storage space may implement a data storage service for the application.

Then, the cloud management platform may deploy the binding relationship in the proxy node, so that the proxy node stores the binding relationship. In this case, when the application has a data processing requirement, the compute node running the application may send an access request for the storage node cluster to the proxy node. After receiving the access request from the compute node, the proxy node may verify, based on the binding relationship, information included in the access request, to determine whether the access request includes both the identifier of the compute node and the identifier of the storage space. If the access request includes the identifier of the compute node and the identifier of the storage space, it indicates that the information included in the access request conforms to the binding relationship, and the proxy node creates the storage space in the storage node cluster or completes data processing in the storage space, to meet the data processing requirement of the application. If the access request does not include the identifier of the compute node or the identifier of the storage space, it indicates that the information included in the access request does not conform to the binding relationship, and the proxy node rejects to process the access request.

It should be noted that, if the identifier of the application is not bound to an identifier of any storage space, it indicates that the application is an application that is bound to the storage space for the first time. Therefore, the cloud management platform may directly generate the identifier of the storage space serving the application, and create the binding relationship among the identifier of the application, the identifier of the compute node, and the identifier of the storage space. If the identifier of the application has been bound to an identifier of other storage space, it indicates that the application is an application that is not bound to the storage space for the first time. Therefore, the cloud management platform may directly create a binding relationship among the identifier of the application, the identifier of the compute node, and the identifier of the other storage space. Subsequent operations in the two cases are similar, and details are not described subsequently again. In this embodiment, only the former is used as an example for illustration.

Specifically, the cloud management platform may deploy the binding relationship in the proxy node in the following manner:

Because the storage node cluster includes a plurality of storage nodes and a management node that manages the plurality of storage nodes, a first end of the management node is communicatively connected to the cloud management platform, a second end of the management node is communicatively connected to the proxy node, and a third end of the management node is communicatively connected to the plurality of storage nodes, after obtaining the binding relationship among the identifier of the application, the identifier of the compute node, and the identifier of the storage space, the cloud management platform may directly send the binding relationship to the management node. After obtaining the binding relationship, the management node may store the binding relationship, and send the binding relationship to the proxy node, so that the proxy node stores the binding relationship.

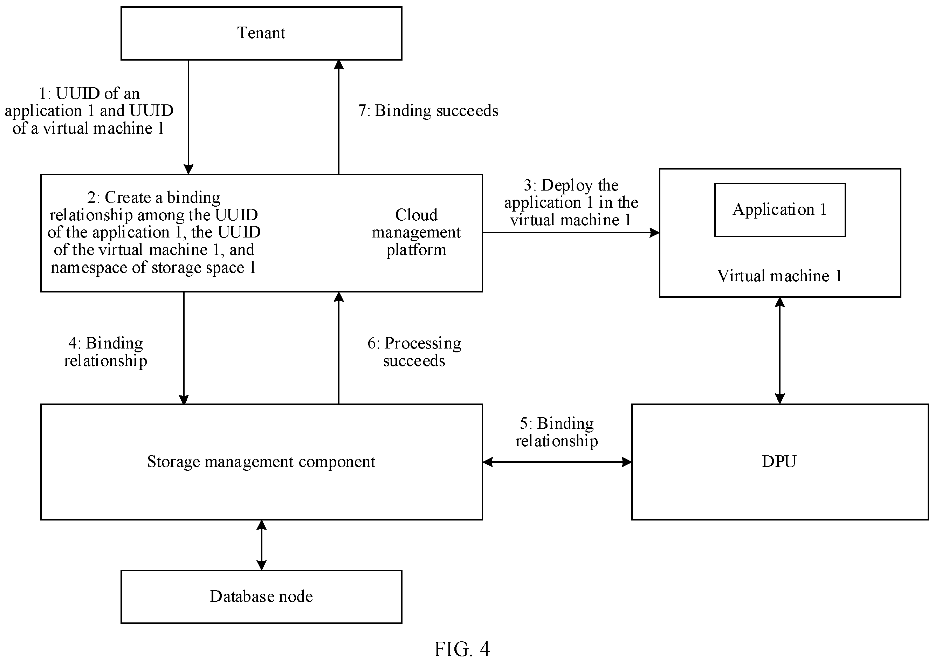

The foregoing example is still used. As shown in FIG. 4 (where FIG. 4 is a diagram of binding an application to a virtual machine according to an embodiment of this application, and FIG. 4 is drawn based on FIG. 3), when the tenant needs to bind the application 1 to the virtual machine 1 together, the tenant may input the UUID of the application 1 and the UUID of the virtual machine 1 into the binding relationship input field on the tenant interface. Therefore, the cloud management platform may receive the UUID of the application 1 and the UUID of the virtual machine 1 through the binding relationship input field. Next, the cloud management platform may determine whether the UUID of the application 1 has been bound to a UUID of another virtual machine. If the UUID of the application 1 has not been bound to the UUID of the another virtual machine, the cloud management platform generates namespace of storage space 1, and creates a binding relationship among the UUID of the application 1, the UUID of the virtual machine 1, and the namespace of the storage space 1. (If the UUID of the application 1 has been bound to the UUID of the another virtual machine, it indicates that the application 1 has been deployed on the another virtual machine, and the tenant needs to additionally add a virtual machine 1 configured to run the application 1. In this case, the cloud management platform has previously generated namespace of other storage space for the UUID of the application 1, and therefore directly obtains the namespace of the other storage space, and creates a binding relationship among the UUID of the application 1, the UUID of the virtual machine 1, and the namespace of the other storage space. Subsequent operations are similar to those in the foregoing case, and details are not described subsequently again.)

After obtaining the binding relationship among the UUID of the application 1, the UUID of the virtual machine 1, and the namespace of the storage space 1, the cloud management platform enables the virtual machine 1 to run the application 1, and sends the binding relationship to a storage management component (that is, the foregoing management node) in a storage pool, so that the management component stores the binding relationship, and notifies a DPU to store the binding relationship. In this way, the binding relationship is synchronized among the cloud management platform, the storage management component, and the DPU.

More specifically, after the cloud management platform deploys the binding relationship in the proxy node, the cloud management platform may further perform the following operations:
After sending the binding relationship to the proxy node, the management node may notify the cloud management platform that the binding relationship has been successfully processed. Therefore, the cloud management platform may present, to the tenant through the binding interface, that the application has been bound to the compute node. This is equivalent to notifying the tenant that the application has been successfully bound to the compute node.

The foregoing example is still used. After notifying the DPU to store the binding relationship, the management component may return, to the cloud management platform, that processing for the binding relationship is completed. Therefore, the cloud management platform may generate a reminder window on the tenant interface, where the reminder window includes content such as that the application 1 has been successfully bound to the virtual machine 1. After browsing the reminder window, the tenant may know that the application 1 has been successfully bound to the virtual machine 1.

More specifically, before the compute node sends the access request to the proxy node, the compute node may further perform the following operations:
When the application needs to be initialized, the compute node running the application may send, to the proxy node, an initialization request generated by the application. It should be noted that the initialization request may carry the identifier of the application and the identifier of the compute node (where for example, the initialization request generated by the application includes only the identifier of the application, and when the compute node sends the initialization request to the proxy node through a data channel, the data channel automatically enables the initialization request to include the identifier of the compute node, and the like). After obtaining the initialization request from the compute node, the proxy node may verify, based on the binding relationship, information included in the initialization request, to determine whether the access request includes both the identifier of the application and the identifier of the compute node. If the initialization request includes the identifier of the application and the identifier of the compute node, it indicates that the information included in the initialization request conforms to the binding relationship. The proxy node finds, from the binding relationship, the identifier of the storage space serving the application, and sends the identifier to the compute node, so that the application stores the identifier of the storage space (where the application may also store a binding relationship between the identifier of the storage space and the identifier of the application, and the like), to complete the initialization. If the initialization request does not include the identifier of the application or the identifier of the compute node, it indicates that the information included in the initialization request does not conform to the binding relationship, and the proxy node rejects to process the initialization request.

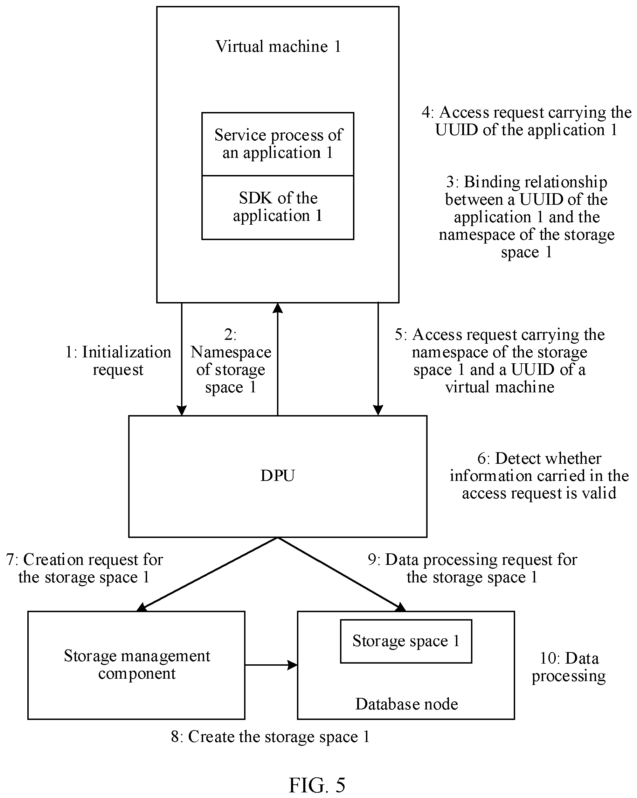

The foregoing example is still used. As shown in FIG. 5 (where FIG. 5 is a diagram of accessing a storage pool by a virtual machine according to an embodiment of this application, and FIG. 5 is drawn based on FIG. 4.), during initialization of the application 1, the application 1 may generate an initialization request, where the initialization request carries the UUID of the application 1. The virtual machine 1 running the application 1 may send the initialization request to a DPU through a data channel (that is, a communication channel between the virtual machine 1 and the DPU). In this process, the data channel automatically enables the initialization request to carry the UUID of the virtual machine 1. After obtaining the initialization request, the DPU verifies, based on the foregoing binding relationship, whether information carried in the initialization request is valid (whether the information conforms to the binding relationship). If the initialization request includes the UUID of the application 1 and the UUID of the virtual machine 1 bounded to the application 1, it indicates that the information carried in the initialization request is valid, and the DPU may return the namespace of the storage space 1 to the virtual machine 1, to store the namespace in a software development kit (software development kit, SDK) of the application 1 running on the virtual machine 1. Therefore, the SDK of the application 1 may further store a binding relationship between the UUID of the application 1 and the namespace of the storage space 1, to assist the application 1 in completing initialization.

More specifically, after the compute node sends the access request to the proxy node, the proxy node may process the access request in the following manner:
When the application needs to process data, because the application has obtained the identifier of the storage space serving the application, the application may generate the access request carrying the storage space. Then, the compute node running the application enables the access request to carry the identifier of the application and the identifier of the compute node, and sends the access request to the proxy node (where for example, the access request generated by the application includes only the identifier of the storage space, and when the compute node sends the initialization request to the proxy node through the data channel, the data channel automatically enables the access request to include the identifier of the compute node, and the like). After obtaining the access request, because the proxy node stores the binding relationship among the identifier of the application, the identifier of the compute node, and the identifier of the storage space, the proxy node may verify the access request based on the binding relationship, to determine whether the access request includes both the identifier of the compute node and the identifier of the storage space. If the access request includes the identifier of the compute node and the identifier of the storage space, it indicates that the information included in the access request conforms to the binding relationship, and the proxy node performs different processing based on a specific type of the access request.

If the access request is a creation request for the storage space, the proxy node may send the access request to the management node, so that the management node verifies the access request. If the access request includes the identifier of the storage space, it indicates that the information included in the access request is valid. Therefore, the management node selects a storage node from the plurality of storage nodes, and creates the storage space in the storage node. The identifier of the storage space may be used as metadata (index) of the storage space. If the access request is a data processing request for the storage space, the proxy node may send the access request to the storage node, so that the storage node verifies the access request. If the access request includes the identifier of the storage space, it indicates that the access request is valid. Therefore, the storage node may find the storage space based on the identifier of the storage space, and process the data in the storage space (for example, write data into the storage space, read data from the storage space, or delete data from the storage space), to meet the data processing requirement of the application.

The foregoing example is still used. After the application 1 is initialized, data processing may be performed. First, a service process of the application 1 may generate an access request, and the access request carries the UUID of the application 1. Next, the service process of the application 1 may send the access request to the SDK of the application 1, and the SDK of the application 1 may convert the UUID of the application 1 in the access request into the namespace of the storage space 1. Therefore, the virtual machine 1 may send, to the DPU through the data channel, the access request that carries the namespace of the storage space 1. In this process, the data channel automatically enables the access request to carry the UUID of the virtual machine 1. Then, the DPU may verify information carried in the access request. If the access request includes information about the virtual machine 1 and the namespace of the storage space 1 bound to the virtual machine 1, it indicates that the information carried in the access request is valid.

In this case, when the access request is a creation request for the storage space 1, the DPU may send the access request to the storage management component, so that the storage management component creates the storage space 1 in a database node (the foregoing storage node), and uses the namespace of the storage space 1 as metadata of the storage space 1. When the access request is a data processing request for the storage space 1, the DPU may send the access request to the database node, so that the database node verifies the access request. If the access request carries the namespace of the storage space 1, it indicates that the access request is valid. Therefore, the database node may find the storage space 1, and complete operations such as data addition (append), data reading (read), and data deletion (delete) in the storage space 1, to meet a data processing requirement of the application 1.

In addition, an embodiment of this application further provides a storage node cluster access method that is based on a proxy node. The method includes: The proxy node receives a binding relationship among an identifier of an application, an identifier of a compute node, and an identifier of storage space from a cloud management platform, where the identifier of the application and the identifier of the compute node are obtained by the cloud management platform from a tenant, the compute node runs the application, the identifier of the storage space is generated by the cloud management platform, and the storage space is used to store data of the application. The proxy node receives an access request from the compute node, verifies the access request based on the binding relationship, and if the access request includes the identifier of the compute node and the identifier of the storage space, the proxy node creates the storage space in a storage node cluster or processes the data in the storage space. For descriptions of the method, refer to related descriptions in the embodiment shown in FIG. 2. Details are not described herein again.

In this embodiment of this application, when the tenant needs to bind an application of the tenant to a compute node of the tenant together, the tenant may input an identifier of the application and an identifier of the compute node into a binding interface provided by the cloud management platform. Next, the cloud management platform may determine information about storage space (used to store data of the application) serving the application, to create a binding relationship among the identifier of the application, the identifier of the compute node, and an identifier of the storage space, and enable the compute node to run the application. Then, the cloud management platform may deploy the binding relationship in the proxy node. Because the proxy node is located between the compute node and the storage node cluster, when the proxy node receives an access request from the compute node, the proxy node may verify the access request based on the binding relationship. If the access request includes the identifier of the compute node and the identifier of the storage space bound to the compute node, the proxy node creates the storage space in the storage node cluster or completes data processing in the storage space. In the foregoing process, the cloud management platform may create, based on a request of the tenant, the binding relationship among the identifier indicating the application of the tenant, the identifier of the compute node running the application, and the identifier of the storage space serving the application, and deploy the binding relationship in the proxy node. When the compute node running the application sends the access request to the proxy node, the proxy node may perform security verification on the access request based on the binding relationship. If the access request passes the security verification, it indicates that information carried in the access request conforms to the binding relationship. Therefore, the proxy node may replace the compute node running the application to create, in the storage node cluster (that is, a storage pool), the storage space serving the application or access the storage space to complete data processing, so as to meet a data processing requirement of the application. It can be learned that the cloud management platform may indicate, by using the binding relationship among the application, the compute node, and the storage space, the proxy node to create, in the storage pool for the application of the tenant, the storage space dedicated to the application. When the compute node running the application needs to access the storage space, the proxy node may perform security verification on a corresponding access request. After the security verification succeeds, the proxy node replaces the compute node to access the storage space, so as to complete data processing. In this way, even if there are a plurality of applications, the proxy node may create dedicated storage space for each application in the storage pool, so that the plurality of applications can share the same storage pool. In addition, when a compute node running each application needs to access corresponding storage space, the proxy node may perform security verification on a corresponding access request in real time, and the compute node is allowed to access the corresponding storage space only after the security verification succeeds, to ensure data security between the applications.

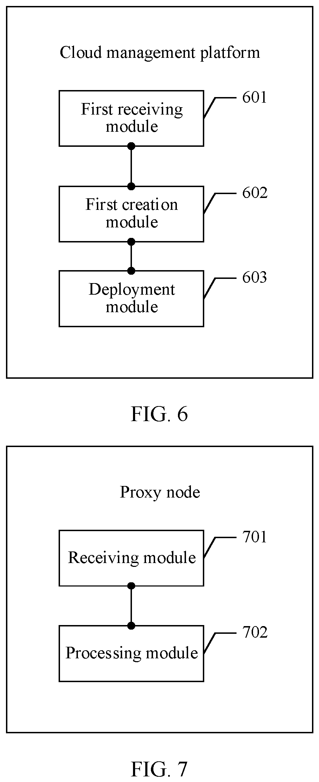

The foregoing describes in detail a storage node cluster access method that is based on a cloud management platform and a storage node cluster access method that is based on a proxy node according to embodiments of this application. The following describes a cloud management platform and a proxy node provided in embodiments of this application. FIG. 6 is a diagram of a structure of a cloud management platform according to an embodiment of this application. As shown in FIG. 6, the cloud management platform is configured to manage infrastructure that provides a cloud service. The infrastructure includes a compute node, a proxy node, and a storage node cluster. The cloud management platform includes:
a first receiving module 601, configured to receive an identifier of an application and an identifier of the compute node from a tenant through a binding interface, where for example, the first receiving module 601 is configured to implement step 201 in the embodiment shown in FIG. 2;
a first creation module 602, configured to create a binding relationship among the identifier of the application, the identifier of the compute node, and an identifier of storage space, and deploy the application in the compute node, where the storage space is used to store data of the application, where for example, the first creation module 602 is configured to implement step 202 in the embodiment shown in FIG. 2; and
a deployment module 603, configured to deploy the binding relationship in the proxy node, where the binding relationship indicates the proxy node to verify an access request from the compute node, and if the access request includes the identifier of the compute node and the identifier of the storage space, the proxy node creates the storage space in the storage node cluster or processes the data in the storage space, where for example, the deployment module 603 is configured to implement step 203 in the embodiment shown in FIG. 2.

In a possible implementation, the identifier of the storage space includes namespace of the storage space.

In a possible implementation, the cloud management platform further includes: a second receiving module, configured to receive an identifier creation request for the application from the tenant through a creation interface; and a second creation module, configured to create the identifier of the application based on the identifier creation request, and provide the identifier of the application for the tenant through the creation interface.

In a possible implementation, the cloud management platform further includes: a notification module, configured to notify, through the binding interface, the tenant that the application has been bound to the compute node.

In a possible implementation, the storage node cluster includes a plurality of storage nodes and a management node that manages the plurality of storage nodes, and the deployment module is configured to send the binding relationship to the management node, to deploy the binding relationship in the proxy node via the management node.

In a possible implementation, the binding relationship further indicates the proxy node to verify an initialization request from the compute node, and if the initialization request includes the identifier of the application and the identifier of the compute node, the proxy node sends the identifier of the storage space to the compute node.

In a possible implementation, that the proxy node creates the storage space in the storage node cluster or processes the data in the storage space includes: The proxy node sends the access request to the management node, where the access request indicates the management node to verify the access request, and if the access request includes the identifier of the storage space, the proxy node creates the storage space in any one of the plurality of storage nodes; or the proxy node sends the access request to the storage node, where the access request indicates the storage node to verify the access request, and if the access request includes the identifier of the storage space, the proxy node processes the data in the storage space.

In a possible implementation, the storage node cluster is located at a same site, and the site includes any one of the following: a rack, a room, a data center, a region, and an availability zone.

In a possible implementation, the compute node includes any one of the following: a physical server, a bare metal server, a virtual machine, and a container.

FIG. 7 is a diagram of a structure of a proxy node according to an embodiment of this application. As shown in FIG. 7, the proxy node is disposed in infrastructure that provides a cloud service, the infrastructure is managed by a cloud management platform, the infrastructure further includes a compute node and a storage node cluster, and the proxy node includes:
a receiving module 701, configured to receive a binding relationship among an identifier of an application, an identifier of the compute node, and an identifier of storage space from the cloud management platform, where the identifier of the application and the identifier of the compute node are obtained by the cloud management platform from a tenant, the compute node runs the application, the identifier of the storage space is generated by the cloud management platform, and the storage space is used to store data of the application, where for example, the receiving module 701 may be configured to implement related steps of a storage node cluster access method that is based on the cloud management platform; and
a processing module 702, configured to receive an access request from the compute node, verify the access request based on the binding relationship, and if the access request includes the identifier of the compute node and the identifier of the storage space, create the storage space in the storage node cluster or process the data in the storage space, where for example, the processing module 702 may be configured to implement related steps of implementing the storage node cluster access method that is based on the cloud management platform.

In a possible implementation, the identifier of the storage space includes namespace of the storage space.

In a possible implementation, the storage node cluster includes a plurality of storage nodes and a management node that manages the plurality of storage nodes, and the receiving module 701 is further configured to directly receive the binding relationship among the identifier of the application, the identifier of the compute node, and the identifier of the storage space from the management node, where the binding relationship is obtained by the management node from the cloud management platform.

In a possible implementation, the proxy node further includes: a feedback module, configured to verify an initialization request from the compute node, and if the initialization request includes the identifier of the application and the identifier of the compute node, the proxy node sends the identifier of the storage space to the compute node.

In a possible implementation, the processing module 702 is configured to: send the access request to the management node, where the access request indicates the management node to verify the access request, and if the access request includes an identifier of storage space, the management node creates storage space in any one of the plurality of storage nodes; or send the access request to the storage node, where the access request indicates the storage node to verify the access request, and if the access request includes the identifier of the storage space, the storage node processes the data in the storage space.

In a possible implementation, the storage node cluster is located at a same site, and the site includes any one of the following: a rack, a room, a data center, a region, and an availability zone.

In a possible implementation, the compute node includes any one of the following: a physical server, a bare metal server, a virtual machine, and a container.

It should be noted that, because content such as information exchange and an implementation process between the modules/units of the apparatus is based on a same concept as the method embodiments of this application, technical effects brought by the content are the same as those brought by the method embodiments of this application. For specific content, refer to the descriptions in the foregoing method embodiments of this application. Details are not described herein again.

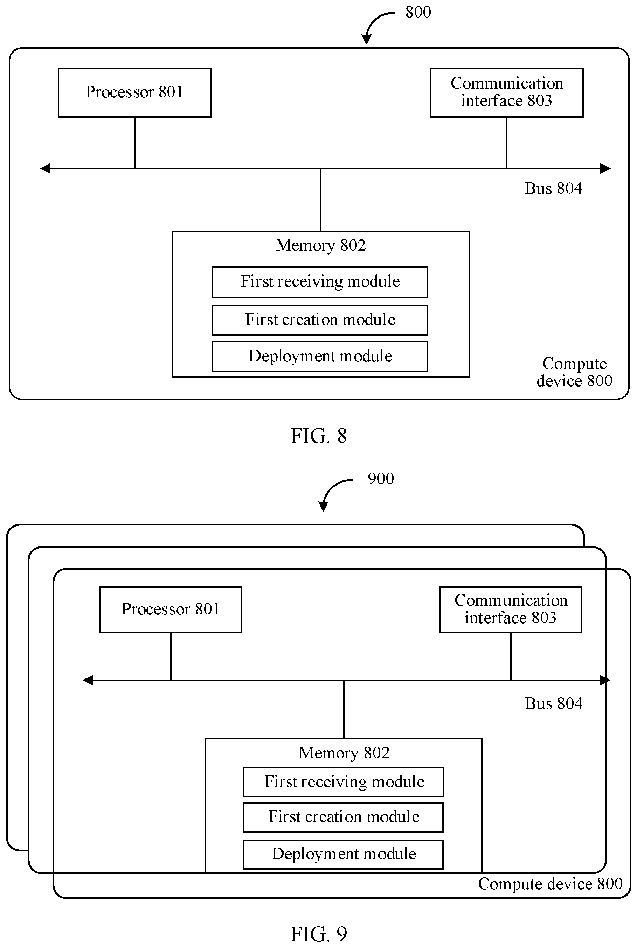

FIG. 8 is a diagram of a structure of a compute device according to an embodiment of this application. As shown in FIG. 8, the compute device 800 (which may be configured to present the foregoing cloud management platform or proxy node) includes a processor 801, a memory 802, a communication interface 803, and a bus 804. The processor 801, the memory 802, and the communication interface 803 are coupled through the bus (not shown in the figure). The memory 802 stores instructions. When the execution instructions in the memory 802 are executed, the compute device 800 performs the method steps performed by the cloud management platform or the proxy node in the foregoing method embodiments.

The compute device 800 may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SoC).

The processor 801 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The memory 802 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 802 stores executable program code, and the processor 801 executes the executable program code to separately implement functions of modules such as the first receiving module, the first creation module, and the deployment module (or the receiving module and the processing module in the proxy node) in the cloud management platform, so as to implement the storage node cluster access method that is based on the cloud management platform (or the proxy node). In other words, the memory 802 stores instructions for performing the storage node cluster access method that is based on the cloud management platform (or the proxy node).

The communication interface 803 uses a transceiver module such as but not limited to a network interface card or a transceiver, to implement communication between the compute device 800 and another device or a communication network.

In addition to a data bus, the bus 804 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. The bus may be classified into an address bus, a data bus, a control bus, and the like.

FIG. 9 is a diagram of a structure of a compute device cluster according to an embodiment of this application. As shown in FIG. 9, the compute device cluster 900 includes at least one compute device 800.

As shown in FIG. 9, the compute device cluster 900 includes at least one compute device 800. Memories 802 in one or more compute devices 800 in the compute device cluster 900 may store same instructions for performing the storage node cluster access method that is based on the cloud management platform (or the proxy node).

In some possible implementations, the memories 802 in the one or more compute devices 800 in the compute device cluster 900 may alternatively respectively store some instructions for performing the storage node cluster access method that is based on the cloud management platform (or the proxy node). In other words, a combination of the one or more compute devices 800 may jointly perform the storage node cluster access method that is based on the cloud management platform (or the proxy node).

It should be noted that the memories 802 in different compute devices 800 in the compute device cluster 900 may store different instructions, which are respectively used to perform some functions of the cloud management platform (or proxy node). In other words, the instructions stored in the memories 802 in the different compute devices 800 may implement functions of one or more modules of the first receiving module, the first creation module, and the deployment module (or the receiving module and the processing module in the proxy node) in the cloud management platform.

In some possible implementations, the one or more compute devices 800 in the compute device cluster 900 may be connected via a network. The network may be a wide area network, a local area network, or the like.

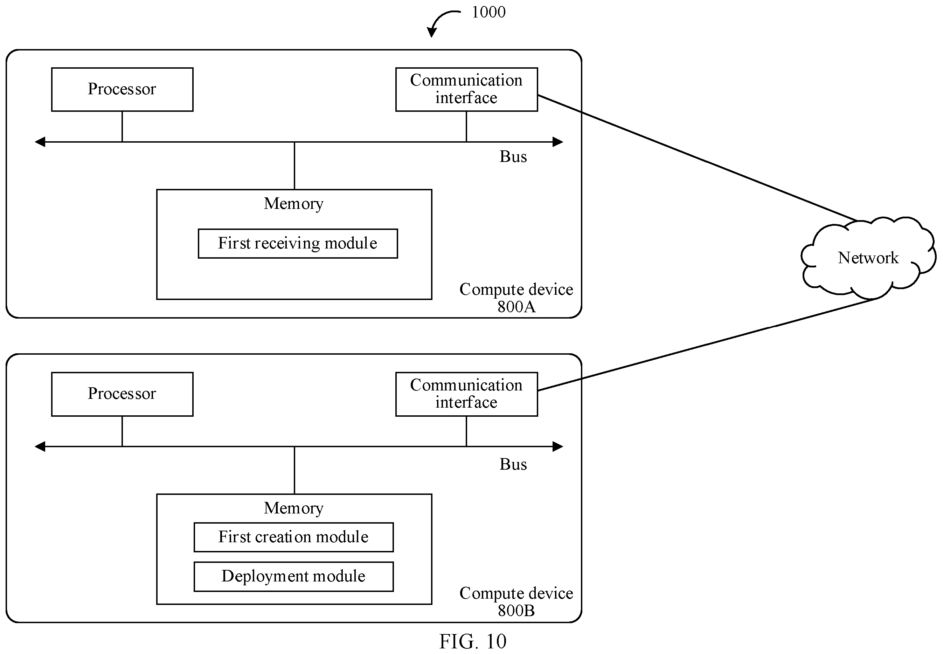

FIG. 10 is a diagram of computer devices in a computer cluster being connected via a network according to an embodiment of this application. As shown in FIG. 10, two compute devices 800A and 800B are connected via a network. Specifically, each compute device is connected to the network through a communication interface in the compute device.

In a possible implementation, the memory in the compute device 800A stores instructions for performing functions of a module such as the first receiving module (or the receiving module), and the memory in the compute device 800B stores instructions for performing functions of modules such as the first creation module and the deployment module (or the processing module).

It should be understood that functions of the compute device 800A shown in FIG. 10 may alternatively be completed by a plurality of compute devices. Similarly, functions of the compute device 800B may also be completed by a plurality of compute devices.

An embodiment of this application further relates to a computer storage medium. The computer readable storage medium stores a program used for signal processing. When the program is run on a computer, the computer is caused to perform the steps performed by the cloud management platform or the proxy node in the embodiment shown in FIG. 2.

An embodiment of this application further relates to a computer program product. The computer program product stores instructions. When the instructions are executed by a computer, the computer is caused to perform the steps performed by the cloud management platform or the proxy node in the embodiment shown in FIG. 2.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application, or a part contributing to conventional technologies, or all or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, read-only memory), a random access memory (RAM, random access memory), a magnetic disk, or an optical disc.

## Claims

1. A storage node cluster access method based on a cloud management platform, wherein the cloud management platform is configured to manage infrastructure that provides a cloud service, the infrastructure comprises a compute node, a proxy node, and a storage node cluster, and the method comprises:
receiving, by the cloud management platform, an identifier of an application and an identifier of the compute node from a tenant through a binding interface;
creating, by the cloud management platform, a binding relationship among the identifier of the application, the identifier of the compute node, and an identifier of storage space, and deploying the application in the compute node, wherein the storage space is used to store data of the application; and
deploying, by the cloud management platform, the binding relationship in the proxy node, wherein the binding relationship indicates the proxy node to verify an access request from the compute node, and if the access request comprises the identifier of the compute node and the identifier of the storage space, the proxy node creates the storage space in the storage node cluster or processes the data in the storage space.

2. The method according to claim 1, wherein the identifier of the storage space comprises namespace of the storage space.

3. The method according to claim 1 or 2, wherein the method further comprises:
receiving, by the cloud management platform, an identifier creation request for the application from the tenant through a creation interface; and
creating, by the cloud management platform, the identifier of the application based on the identifier creation request, and providing the identifier of the application for the tenant through the creation interface.

4. The method according to any one of claims 1 to 3, wherein the method further comprises:
notifying, by the cloud management platform through the binding interface, the tenant that the application has been bound to the compute node.

5. The method according to any one of claims 1 to 4, wherein the storage node cluster comprises a plurality of storage nodes and a management node that manages the plurality of storage nodes, and deploying, by the cloud management platform, the binding relationship in the proxy node comprises:
sending, by the cloud management platform, the binding relationship to the management node, to deploy the binding relationship in the proxy node via the management node.

6. The method according to any one of claims 1 to 5, wherein the binding relationship further indicates the proxy node to verify an initialization request from the compute node, and if the initialization request comprises the identifier of the application and the identifier of the compute node, the proxy node sends the identifier of the storage space to the compute node.

7. The method according to claim 5, wherein that the proxy node creates the storage space in the storage node cluster or processes the data in the storage space comprises:
the proxy node sends the access request to the management node, wherein the access request indicates the management node to verify the access request, and if the access request comprises the identifier of the storage space, the proxy node creates the storage space in any one of the plurality of storage nodes; or
the proxy node sends the access request to the storage node, wherein the access request indicates the storage node to verify the access request, and if the access request comprises the identifier of the storage space, the proxy node processes the data in the storage space.

8. The method according to any one of claims 1 to 7, wherein the storage node cluster is located at a same site, and the site comprises any one of the following: a rack, a room, a data center, a region, or an availability zone.

9. The method according to any one of claims 1 to 8, wherein the compute node comprises any one of the following: a physical server, a bare metal server, a virtual machine, and a container.

10. A cloud management platform, wherein the cloud management platform is configured to manage infrastructure that provides a cloud service, the infrastructure comprises a compute node, a proxy node, and a storage node cluster, and the cloud management platform comprises:
a first receiving module, configured to receive an identifier of the application and an identifier of the compute node from the tenant through a binding interface;
a first creation module, configured to create a binding relationship among the identifier of the application, the identifier of the compute node, and an identifier of storage space, and deploy the application in the compute node, wherein the storage space is used to store data of the application; and
a deployment module, configured to deploy the binding relationship in the proxy node, wherein the binding relationship indicates the proxy node to verify an access request from the compute node, and if the access request comprises the identifier of the compute node and the identifier of the storage space, the proxy node creates the storage space in the storage node cluster or processes the data in the storage space.

11. The cloud management platform according to claim 10, wherein the identifier of the storage space comprises namespace of the storage space.

12. The cloud management platform according to claim 10 or 11, wherein the cloud management platform further comprises:
a second receiving module, configured to receive an identifier creation request for the application from the tenant through a creation interface; and
a second creation module, configured to create the identifier of the application based on the identifier creation request, and provide the identifier of the application for the tenant through the creation interface.

13. The cloud management platform according to any one of claims 10 to 12, wherein the cloud management platform further comprises:
a notification module, configured to notify, through the binding interface, the tenant that the application has been bound to the compute node.

14. The cloud management platform according to any one of claims 10 to 13, wherein the storage node cluster comprises a plurality of storage nodes and a management node that manages the plurality of storage nodes, and the deployment module is configured to send the binding relationship to the management node, to deploy the binding relationship in the proxy node via the management node.

15. The cloud management platform according to any one of claims 10 to 14, wherein the binding relationship further indicates the proxy node to verify an initialization request from the compute node, and if the initialization request comprises the identifier of the application and the identifier of the compute node, the proxy node sends the identifier of the storage space to the compute node.

16. The cloud management platform according to claim 14, wherein that the proxy node creates the storage space in the storage node cluster or processes the data in the storage space comprises:
the proxy node sends the access request to the management node, wherein the access request indicates the management node to verify the access request, and if the access request comprises the identifier of the storage space, the proxy node creates the storage space in any one of the plurality of storage nodes; or
the proxy node sends the access request to the storage node, wherein the access request indicates the storage node to verify the access request, and if the access request comprises the identifier of the storage space, the proxy node processes the data in the storage space.

17. The cloud management platform according to any one of claims 10 to 16, wherein the storage node cluster is located at a same site, and the site comprises any one of the following: a rack, a room, a data center, a region, and an availability zone.

18. The cloud management platform according to any one of claims 10 to 17, wherein the compute node comprises any one of the following: a physical server, a bare metal server, a virtual machine, and a container.

19. A compute device cluster, wherein the compute device cluster comprises at least one compute device, and each compute device comprises a processor and a memory, wherein
the memory is configured to store instructions; and
the processor is configured to cause, based on the instructions, the compute device cluster to perform the method according to any one of claims 1 to 9.

20. A computer storage medium, wherein the computer storage medium stores one or more instructions, and when the instructions are executed by one or more computers, the one or more computers are caused to implement the method according to any one of claims 1 to 9.

21. A computer program product, wherein the computer program product stores instructions, and when the instructions are executed by a computer, the computer is caused to implement the method according to any one of claims 1 to 9.
